(19) Europäisches Patentamt
European Patent Office
Office européen des brevets

(11) EP 2 288 667 B1

# (12) EUROPÄISCHE PATENTSCHRIFT

(45) Veröffentlichungstag und Bekanntmachung des Hinweises auf die Patenterteilung:
**17.07.2013 Patentblatt 2013/29**

(21) Anmeldenummer: **09761607.2**

(22) Anmeldetag: **27.05.2009**

(51) Int Cl.:
***C09J 7/00*** *(2006.01)*

(86) Internationale Anmeldenummer:
**PCT/EP2009/056412**

(87) Internationale Veröffentlichungsnummer:
**WO 2009/150044 (17.12.2009 Gazette 2009/51)**

## (54) HAFTKLEBEMASSE MIT VERBESSERTEM ABZUGSVERHALTEN

PRESSURE-SENSITIVE ADHESIVE COMPOSITION HAVING AN IMPROVED RELEASE BEHAVIOR

MATIÈRE AUTOADHÉSIVE À COMPORTEMENT EN ARRACHEMENT AMÉLIORÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **10.06.2008 DE 102008027501**

(43) Veröffentlichungstag der Anmeldung:
**02.03.2011 Patentblatt 2011/09**

(73) Patentinhaber: **TESA SE**
**20253 Hamburg (DE)**

(72) Erfinder:
- **JAUER, Stephan**
  **37085 Göttingen (DE)**
- **PAPENBROOCK, Marten**
  **20253 Hamburg (DE)**

(56) Entgegenhaltungen:
**WO-A-2006/073920**
**US-A- 6 074 747**
**US-A1- 2003 049 441**
**US-A1- 2006 020 067**
**US-B1- 6 204 350**

EP 2 288 667 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft Haftklebemassen auf Acrylatbasis mit trennkraft-regulierenden Zusätzen sowie die Verwendung von trennkraft-regulierenden Verbindungen in einer Acrylat-Haftklebemasse.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Haftklebemassen miteinander in Kontakt kommen, oder um bei einseitig klebenden Klebebändern eine Verklebung der Haftklebemasse auf dem Träger zu verhindern, werden die Klebebänder vor dem Wickeln auf ein Abdeckmaterial (auch als Trennmaterial bezeichnet) aufgebracht, das zusammen mit dem Klebeband aufgewickelt wird. Dem Fachmann sind derartige Abdeckmaterialien unter den Namen Releaseliner oder Liner bekannt. Neben der Abdeckung von ein- oder doppelseitig klebenden Klebebändern werden Liner auch zur Eindeckung von Etiketten eingesetzt.

Ein Liner (Trennpapier, Trennfolie) ist nicht Bestandteil eines Klebebandes oder Etiketts, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Abhäsive Beschichtungsmassen werden in großem Umfang zur Herstellung von Linern in der Beschichtung insbesondere von flächigen Materialien wie Papieren oder Folien verwendet, um die Adhäsionsneigung von adhärierenden Produkten gegenüber diesen Oberflächen zu verringern.

WO 2006/073920 A2 beschreibt Methoden zum Schützen interner Komponenten eines optischen Gerätes mit Hilfe einer auf die Oberfläche aufgebrachten Schicht, die das Reaktionsprodukt einer Mischung aus einer fluorhaltigen Monomerkomponente und mindestens einem fluorierten Vemetzer enthält.

US 2006/020067 A1 beschreibt ein amorphes syndiotaktisches Polyolefin, das zu mehr als 50 % aus $C_3$-$C_{40}$-$\alpha$-Olefinen besteht. Darüber hinaus werden Zusammensetzungen auf Basis derartiger Polymere beschrieben.

Gegenstand von US 2003/049441 A1 sind Release-Liner auf Basis eines niedrigadhäsiven Coatings, das zu 99 - 33 Gew.-% aus einem fluorhaltigen Acrylpolymer und zu 1 - 67 Gew.-% aus einem fluorhaltigen Öl besteht.

US 6204350 B1 hat feuchtigkeitshärtende Zusammensetzungen auf Basis Silanfunktionalisierter Gruppen und Säure generierender Materialien zum Gegenstand. Die Zusammensetzungen sind als "cure-on-demand"-Systeme ausgebildet und beruhen auf der Freisetzung von Säure nach Anregung durch beispielsweise Wärmezufuhr, Licht oder Mikrowellenstrahlung. Die freigesetzte Säure bewirkt ihrerseits die Vernetzung der Polymere.

US 6074747 beschreibt nicht beschriftbare, zusammenhängend angeordnete selbstklebende Elemente, zum Beispiel Etiketten oder Briefmarken, die aufgerollt oder gestapelt vorliegen. Sie verfügen an ihrer Vorderseite über eine ausgehärtete Release-Beschichtung und auf der Rückseite über eine Haftklebeschicht. Die Release-Schicht umfasst ein Polymer, bei dem es sich um ein Silikon handeln kann, und bestimmte Harzpartikel oder Harzpartikeldomänen.

Wird ein doppelseitig klebendes, mit einem Liner ausgerüstetes Klebeband abgerollt, wird es normalerweise mit der offenen, also linerfreien Haftklebemassenseite auf einen Untergrund aufgeklebt. Die andere Haftklebemassenseite haftet währenddessen auf der beschichteten Oberfläche des Liners noch in genügendem Maße, um die Handhabung des Klebebands zu ermöglichen.

Allerdings muss der Liner vom Klebeband abziehbar sein. Durch den Liner selbst oder durch das Abziehen des Liners darf die Klebkraft der Haftklebemasse nicht wesentlich für die spätere Verwendung beeinträchtigt werden.

Gleichzeitig ist die Stabilität der antiadhäsiven Beschichtung (auch als Trennbeschichtung bezeichnet) auf dem Liner, also die Abhäsivität, über lange Zeiträume wichtig, um die Funktion dieser Beschichtung sowie die Eigenschaften der mit dem Liner eingedeckten Haftklebemasse zu gewährleisten.

Als Trennbeschichtung werden häufig vemetzbare Silikonsysteme eingesetzt. Dazu zählen Mischungen aus Vernetzungskatalysatoren und so genannten thermisch härtbaren kondensations- oder additionsvernetzenden Polysiloxanen. Für kondensationsvernetzende Silikon systeme sind als Vemetzungskatalysatoren häufig Zinnverbindungen, wie Dibutylzinndiacetat, in der Masse zugegen.

Silikonbasierende Trennbeschichtungen auf additionsvernetzender Basis lassen sich durch Hydrosilylierung härten. Diese Trennsysteme umfassen üblicherweise die folgenden Bestandteile: ein alkenyliertes Polydiorganosiloxan (insbesondere lineare Polymere mit endständigen Alkenylgruppen), ein Polyorganowasserstoffsiloxan-Vernetzungsmittel sowie einen Hydrosilylierungskatalysator.

Als Katalysatoren für additionsvernetzende Silikonsysteme (Hydrosilylierungskatalysatoren) haben sich beispielsweise Platin oder Platinverbindungen, wie zum Beispiel der Karstedt-Katalysator [eine Pt(0)-Komplexverbindung] durchgesetzt.

Weiterhin können auch photoaktive Katalysatoren, so genannte Photoinitiatoren, in Kombination mit UV-härtbaren kationisch vernetzenden Siloxanen auf Epoxid- und/oder Vinyletherbasis beziehungsweise UV-härtbaren radikalisch vernetzenden Siloxanen wie etwa acrylatmodifizierte Siloxane verwendet werden. Ebenso ist die Verwendung von elektronenstrahlhärtbaren Silikonacrylaten möglich. Entsprechende Systeme können je nach Verwendungszweck auch weitere Zusätze wie Stabilisatoren oder Verlaufshilfsmittel enthalten.

Weiterhin sind verschiedene Arten von Organopolysiloxanmassen bekannt, die durch Erhitzen oder Bestrahlen vernetzen. Genannt seien Massen, wie sie zum Beispiel in der DE 600 01 779 T2 beschrieben werden, die durch Additionsreaktion vernetzen, nämlich durch Temperaturbehandlung eines Gemisches aus einem Organopolysiloxan mit direkt an die Siliciumatome gebundenen Wasserstoffatomen und einem Organopolysiloxan mit direkt an die Siliciumatome gebundenen Vinylgruppen in Gegenwart eines Hydrosilylierungskatalysators.

Auch photopolymerisierbare Organopolysiloxanmassen können verwendet werden. Genannt seien beispielsweise Massen, die durch die Reaktion zwischen Organopolysiloxanen, die mit (Meth)acrylatgruppen substituierte, direkt an die Siliciumatome gebundene Kohlenwasserstoffreste aufweisen und in Gegenwart eines Photosensibilisators vernetzt werden (siehe EP 0 168 713 B1 oder DE 38 20 294 C1). Ebenfalls verwendbar sind Massen, bei denen die Vernetzungsreaktion zwischen Organopolysiloxanen, die mit Mercaptogruppen substituierte Kohlenwasserstoff direkt an den Siliciumatomen gebunden aufweisen, und Organopolysiloxanen mit direkt an die Siliciumatome gebundenen Vinylgruppen in Gegenwart eines Photosensibilisator hervorgerufen wird. Solche Massen werden beispielsweise in der US 4,725,630 A1 beschrieben.

Beim Einsatz der zum Beispiel in der DE 33 16 166 C1 beschriebenen Organopolysiloxanmassen, die mit Epoxygruppen substituierte, direkt an die Siliciumatomen gebundene Kohlenwasserstoffreste aufweisen, wird die Vernetzungsreaktion durch Freisetzung einer katalytischen Säuremenge induziert, die durch Photozersetzung zugesetzter Oniumsalzkatalysatoren erhalten wird. Andere durch einen kationischen Mechanismus härtbare Organopolysiloxanmassen sind Materialien, welche zum Beispiel Propenyloxysiloxanendgruppen aufweisen.

Von den genannten Silikonen haben die additionsvernetzenden (hydrosilylierungshärtenden) Silikone die größte ökonomische Bedeutung. Eine ungewünschte Eigenschaft dieser Systeme ist allerdings ihre Empfindlichkeit gegenüber Katalysatorgiften, wie zum Beispiel Schwermetall-, Schwefel- und Stickstoffverbindungen (vgl. hierzu "Chemische Technik, Prozesse und Produkte" von R. Dittmeyer et al., Band 5, 5. Auflage, Wiley-VCH, Weinheim, Deutschland, 2005, Kapitel 6-5.3.2, Seiten 1142). Allgemein gilt, dass Elektronendonatoren als Platingifte angesehen werden können (A. Colas, Silicone Chemistry Overview, Technical Paper, Dow Corning). Die Präsenz von Katalysatorgiften führt dazu, dass die Vernetzungsreaktion zwischen den unterschiedlichen Bestandteilen eines Silikontrennlackes nicht mehr oder nur zu einem geringen Teil stattfindet.

Daher wird bei der Herstellung von antiadhäsiven Silikonbeschichtungen die Anwesenheit von Kontaktgiften, insbesondere von Platingiften streng vermieden.

Die praktische Anwendung der genannten antiadhäsiven Silikonbeschichtungen weist allerdings eine Reihe von Nachteilen auf.

So wird das Niveau der Abzugskraft einer Haftklebemasse von einem Silikon-Release-Liner üblicherweise durch Silikon-MQ-Harze (Silikon-Methylsilikon-Kautschuk-Harze) eingestellt. Je nach Anforderung an das Produkt wird ein unterschiedliches Niveau für die Abzugskräfte verlangt. Dies macht es erforderlich, mehrere Release-Liner mit verschiedenen MQ-Harz-Gehalten zu verwenden und damit auch zu bevorraten. Weiterhin können Releaseliner häufig nicht sofort nach der Produktion eingesetzt werden, weil die Eigenschaften des Liners noch kein konstantes Niveau erreicht haben. Dies zeigt sich insbesondere an Messungen der Trennkräfte. Diese sinken in der Regel in den ersten Tagen und Wochen nach der Produktion, bis sie ein konstantes Niveau erreichen. Der Effekt wird "post-curing" oder Nachvernetzung genannt. Die Zeit zwischen Produktion des Releaseliners und Beschichtung mit Haftklebemasse wird dem entsprechend post-curing-Zeit, Nachvernetzungszeit oder auch Reifezeit genannt. Je nach Anforderung an den Releaseliner und auf dem Releaseliner verwendeter Haftklebemasse kann die Reifezeit mehrere Wochen betragen. Wegen der benötigten Reifezeit müssen die produzierten Releaseliner gelagert werden, wodurch Lagerkosten entstehen.

Eine weitere Problematik ergibt sich daraus, dass bei Laminaten von Releaselinern und Haftklebemassen manchmal ein Anstieg der Abzugskräfte bei der Lagerung beobachtet. Dem Fachmann ist dieser Effekt als "Adhesive Lock-up" oder im speziellen für Acrylate als "Acrylic Lock-up" bekannt. Dieser Effekt führt unter Umständen dazu, dass sich der Releaseliner nur schwer oder gar nicht mehr von der Haftklebemasse abziehen lässt und das Produkt somit unbrauchbar wird.

Aufgabe der Erfindung ist, die Nachteile des Standes der Technik zu vermeiden oder zumindest zu verringern. Insbesondere ist es wünschenswert,

- verschiedene Abzugskräfte, die sich zwischen einer acrylatbasierten Haftklebemasse, die sich auf einem mit einer Silikonbeschichtung ausgerüsteten Liner befindet, und diesem Liner einstellen zu können, ohne dass die Klebkraft der Haftklebemasse beeinflusst wird,
- die benötigte Reifezeit vor dem Einsatz des Releaseliners zu verkürzen, und/oder
- den Acrylic Lock-up zu verhindern.

Gelöst wird die Aufgabe durch eine Haftklebemasse auf Acrylatbasis, der Additive zugesetzt sind, die als Kontaktgifte für Hydrosilylierungskatalysatoren (Vernetzungskatalysatoren bei additionsvernetzenden Silikonsystemen) wirken. Derartige Vernetzungskatalysatoren umfassen zum Beispiel Ruthenium, Rhodium, Palladium, Osmium, Indium

oder insbesondere Platin, deren Komplexe und Verbindungen und/oder Katalysatorsysteme aus mehreren dieser Katalysatoren.

Besonders bevorzugt werden Kontaktgifte gewählt, die für häufige Hydrosilylierungskatalysatoren wie Chloroplatinsäure, Platinacetylacetonat, Komplexen von Platin(II)-halogeniden mit ungesättigten Verbindungen - wie beispielsweise Ethylen, Propylen, Organovinylsiloxanen, Styrol -, Hexamethyldiplatin, $PtCl_2PtCl_3$, $Pt(CN)_3$ wirksam sind.

Insbesondere eingesetzt werden Additive, die für platinhaltige Katalysatoren als Kontaktgifte wirken. Insbesondere geeignet sind hierfür schwefel-, stickstoff- und/oder phosphorhaltige Verbindungen, die für platinhaltige Katalysatoren als Kontaktgifte wirken.

Wird im Rahmen dieser Schrift von Haftklebemassen auf Acrylatbasis gesprochen, so seien hiervon auch ohne explizite Erwähnung Haftklebemassen auf Basis von Methacrylaten und auf Basis von Acrylaten und Methacrylaten umfasst, sofern nicht ausdrücklich anders beschreiben.

Der Anspruch 1 betrifft dementsprechend ein Klebeband, umfassend zumindest eine Schicht einer acrylatbasierenden Haftklebemasse und einen mit einer Silikonbeschichtung, umfassend ein alkenyliertes Polydiorganosiloxan, ein Polyorganowasserstoffsiloxan-Vernetzungsmittel sowie einen Hydrosilylierungskatalysator, ausgerüsteten Liner, wobei die Silikonbeschichtung in unmittelbarem Kontakt zu der Haftklebemassenschicht steht, dadurch gekennzeichnet, dass die Haftklebemasse ein oder mehrere Kontaktgifte aufweist, die aus der folgenden Auflistung ausgewählt werden: Amine, Amide, Cyanate, Nitrile, Oxime, Nitroso-Verbindungen, Chelate, Oxazoline, Thioverbindungen, Disulfide, Zinnsalze, Phosphine, Phosphite, Arsen-Verbindungen, Antimon-Verbindungen, Selenide, nicht-aromatische Heterocyclen mit einem freien Elektronenpaar.

Die Unteransprüche betreffen Fortbildungen des Erfindungsgegenstandes sowie die Verwendung von entsprechend additivierten Haftklebemassen zur Regulierung der Abzugskräfte, mit denen der Liner von der Haftklebemasse abgezogen werden kann. Der Ausdruck "Regulierung der Abzugskräfte" umfasst dabei die Einstellung der Abzugskräfte auf ein bestimmtes Niveau, die Reduzierung der Reifezeit, also die Zeit zwischen der Herstellung des Releaseliners und der Kontaktierung mit der Haftklebemassenschicht (also die zeitliche Einstellung der Abzugskräfte auf einen für die Anwendung geeigneten Wert) und auch die Verhinderung von Reaktionen zwischen der Haftklebemasse und dem Silikon (also die Verhinderung der diesbezüglichen Alterung des Systems und somit die zeitliche Veränderung der Abzugskräfte). Dementsprechend schließt die bezeichnete Verwendung alle Vorgänge ein, die zumindest eines, besser alle der genannten Effekte bewirken.

Kontakt- oder auch Katalysatorgifte sind Stoffe, die die Oberfläche eines Katalysators belegen und dadurch temporär oder permanent seine Wirkung mindern oder auch gänzlich ausschalten, also Stoffe, die bei Kontakt mit Katalysatoren diese desaktivieren.

Als Kontaktgifte, insbesondere Platingifte, werden erfindungsgemäß eine oder mehrere Verbindungen eingesetzt, die aus der folgenden Auflistung ausgewählt werden:

Amine (z.B. Triethylamin, Melamin, Triethanolamin),
Amide (z.B. Dimethylformamid),
Cyanate,
Nitrile (z.B. Adiponitiril),
Oxime (z.B. 2-Butoxim),
Nitroso-Verbindungen (z. B. Alpha-Nitroso-beta-naphthol),
Chelate, (z.B. EDTA - Ethylendiamintetraacetat, NTA-Nitriloessigsäure),
Oxazoline (z.B. 1,4-Bisoxazolinbenzol),
Thioverbindungen (z.B. Thioessigsäure, Allylthioharnstoff, Dodecylmercaptan, Didodecyl-3-3'-Thiopropionat),
Disulfide (z.B. Dibenzyldisulfid),
Zinnsalze, (z.B. solche wie sie bei zinn-katalysierten Silikon Release Beschichtungen zum Einsatz kommen),
Phosphine (z.B. Triphenylphosphin),
Phosphite (z.B. Triphenylphosphit),
Arsen-Verbindungen (z.B. Triphenylarsin),
Antimon-Verbindungen (z.B. Triphenylstiban),
Selenide (z.B. Diphenylselenid).

Weiterhin lassen sich als Kontaktgifte nicht-aromatische Heterocyclen mit einem freien Elektronenpaar einsetzen.

Erfindungsgemäß besonders bevorzugt einsetzbare Kontaktgifte, insbesondere Platingifte, werden aus der Auflistung umfassend die folgenden Substanzen ausgewählt:

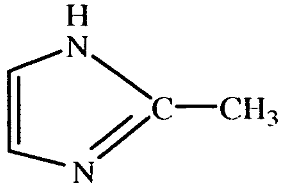

Dyhard MI-C
2-Methyl-1H-imidazol
CAS: 693-98-1

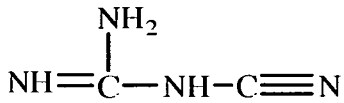

Dyhard 100S
Dicyandiamid
CAS: 461-58-5

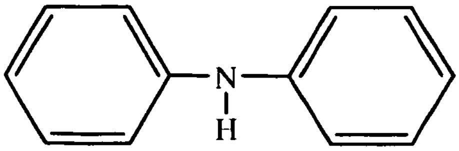

Diphenylamin
CAS: 122-39-4

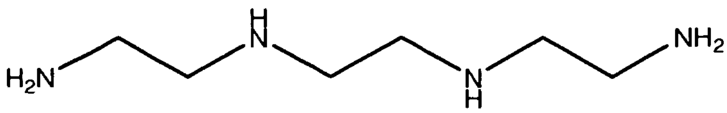

Triethylentetramin
CAS: 112-24-3

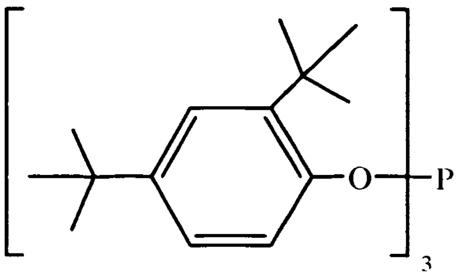

Irgafos 168
Tris(2,4-di-tert-butylphenyl) phosphit
CAS: 31570-04-4

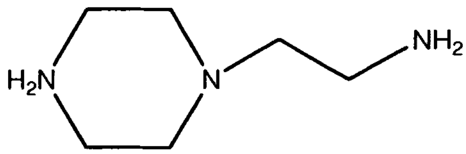

N-(2-Aminoethyl)Piperazin
CAS: 140-31-8

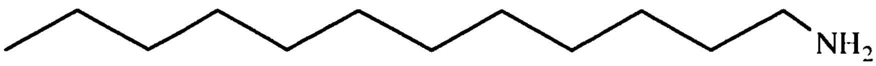

Dodecylamin
CAS: 124-22-1

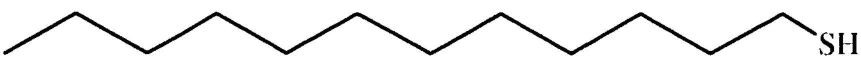

Dodecylmercaptan
CAS: 112-55-0

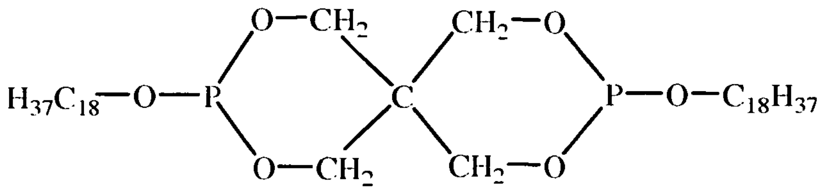

Weston 618 F
Distearyl Pentaerythritol Diphosphit

CAS: 3806-34-6

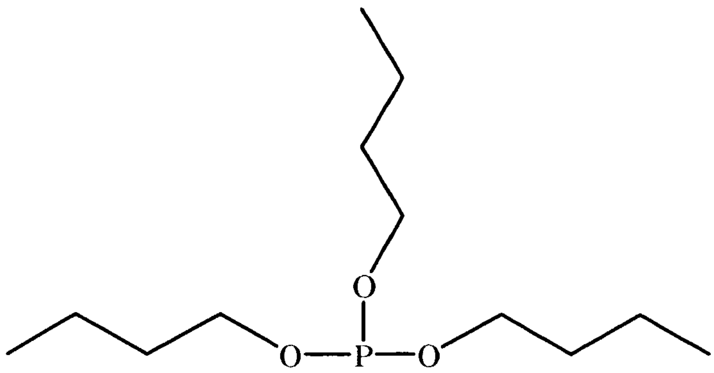

Tributylphosphit

CAS: 102-85-2

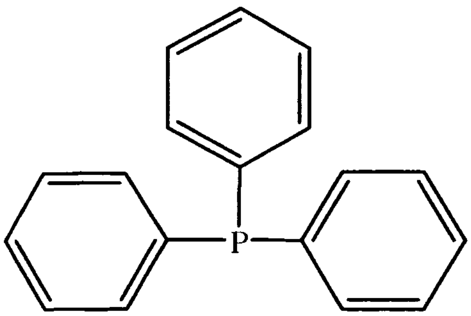

Triphenylphosphin

CAS: 603-35-0

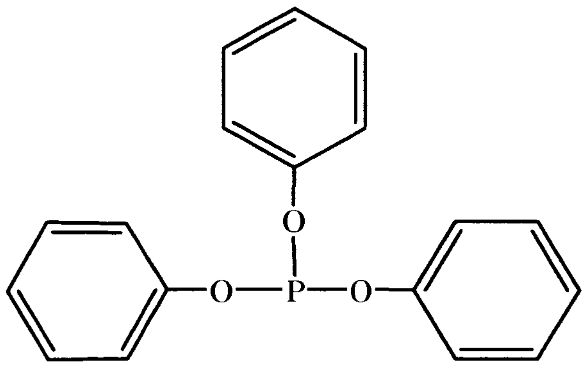

Triphenylphosphit

CAS: 101-02-0

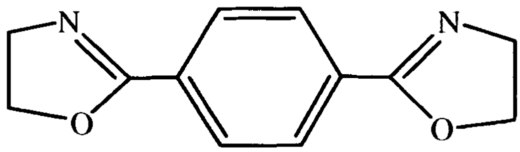

1,4-Bisoxazolinbenzol

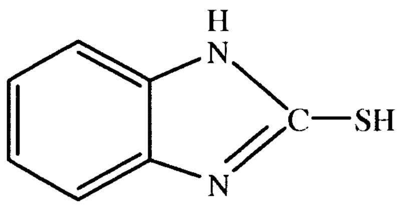

Merbol

CAS: 00633-9

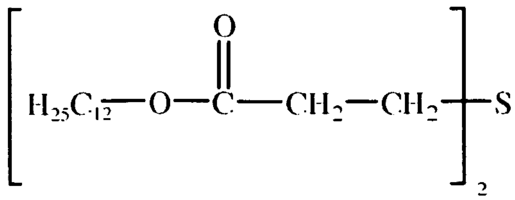

Irganox PS 800
Didodecyl-3-3´-thioproprionat

CAS: 123-28-4

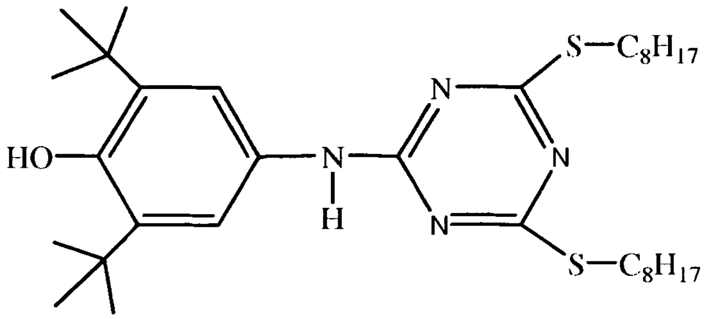

Irganox 565
2,4-Bis-(n-octylthio)-6-(4-hydroxy-3,5-di-tert.butyl-anilino)-1,3,5-triazin

CAS: 991-84-4

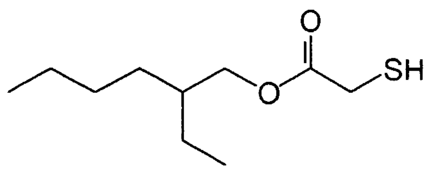

CAS: 25103-09-7
2-Ethylhexylthioglycolat

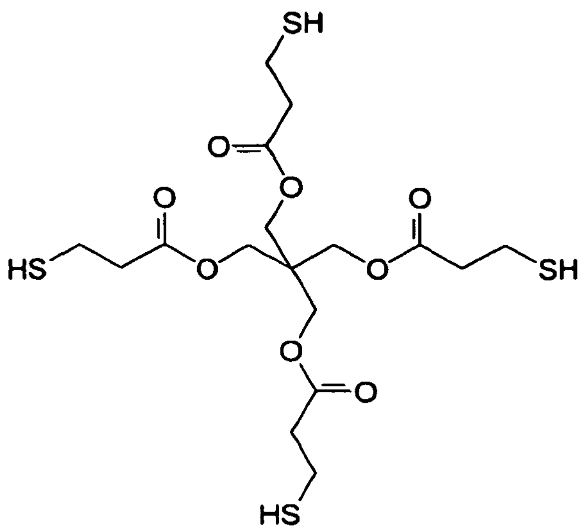

**CAS: 231-472-8**
**Pentaerythritol tetra(3-mercaptopropionat)**

Vorzugsweise werden die Kontaktgifte in der Haftklebemasse in einer Menge bis zu 10 Gew.-%, besonders bevorzugt von 0,0001 bis 5 Gew.-%, ganz besonders bevorzugt 0,001 bis 1 Gew.-% eingesetzt.

Über die Menge des zugesetzten Platingifts lassen sich die Abzugskräfte der Klebeschicht vom Releaseliner direkt einstellen. So führen - abhängig von der Aktivität der Komplexierungswirkung des Platingifts - geringe Platingiftmengen, also etwa im Bereich bis zu 0,01 Gew.-%, insbesondere im Bereich von 0,0008 bis 0,0065 Gew.-%, zu einer guten Abzugsfähigkeit mit aber noch relativ hohen Abzugskräften mit einer schon guten zeitlichen Beständigkeit.

Für eine Einstellung im Bereich mittlerer Abzugskräfte ist es vorteilhaft, die Menge an Platingift in der Haftklebemasse zu erhöhen, etwa auf einen Bereich von 0,005 bis 0,1 Gew.-%, insbesondere von 0,008 bis 0,065 Gew.-%.

Möchte man die Abzugskräfte noch weiter reduzieren, so wählt man vorteilhaft eine Platingiftmenge von 0,05 bis 1 Gew.-%, insbesondere von 0,08 bis 0,65 Gew.-% in der Haftklebemasse. Hierdurch können die Abzugskräfte noch einmal wesentlich reduziert werden, und es ist ein besonders guter Effekt bezüglich des Acrylic. Lock-Ups festzustellen.

Sehr vorteilhaft geht man vor, insbesondere im Falle geringer Platingiftmengen, wenn die additivierte Haftklebemasse zügig auf den frisch hergestellten Liner aufbringt und die Haftklebmasse insbesondere bei erhöhter Temperatur schnell vernetzt. Die Präsenz von Kontaktgiften, besonders Platingiften, führt insbesondere dazu, dass eine (insbesondere platin-) katalysierte Vernetzungsreaktion zwischen den CarboxylGruppen der Acrylat-Haftklebemasse und den im Release-Liner befindlichen Si-H-Gruppen des Silikon-Vernetzers teilweise oder vollständig verhindert wird. Mit anderen Worten, durch die Kontaktgifte, insbesondere Platingifte, lassen sich die Reaktionen an der Grenzfläche Silikon/Haftklebemasse beeinflussen. Je höher der Anteil der platinvergiftenden Verbindungen ist, desto mehr wird die Reaktion zwischen Haftklebemasse und der Silikonbeschichtung behindert mit der Folge, dass die Abzugskräfte des Liners von den Haftklebemassen auf Acrylatbasis abnehmen.

Die erfindungsgemäße acrylatbasierte Haftklebemasse enthält zumindest ein Polyacrylat. Dabei handelt es sich um ein Polymerisat, welches durch radikalische Polymerisation von Acrylmonomeren, worunter auch Methylacrylmonomere verstanden werden, und gegebenenfalls weiteren, copolymerisierbaren Monomeren erhältlich ist.

Bevorzugt handelt es sich um ein mit Epoxid- oder Oxetangruppen vernetzbares Polyacrylat. Entsprechend werden als Monomere oder Comonomere bevorzugt funktionelle, mit Epoxid- oder Oxetangruppen vernetzungsfähige Monomere eingesetzt, hier kommen insbesondere Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen zur Anwendung; bevorzugt sind carbonsäuregruppenhaltige Monomere. Es ist insbesondere vorteilhaft, wenn das Polyacrylat einpolymerisierte Acrylsäure und/oder Methacrylsäure aufweist. Weitere Monomere, die als Comonomere für das Polyacrylat verwendet werden können, sind z.B. Acrylsäure- und/oder Methacrylsäureester mit bis zu 30 C-Atomen, Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und einer oder zwei Doppelbindungen oder Mischungen dieser Monomeren.

Für das erfindungsgemäße Verfahren wird vorzugsweise ein Polyacrylat eingesetzt, welches auf die folgende Eduktmischung, enthaltend insbesondere weich machende Monomere, weiterhin Monomere mit funktionellen Gruppen, die in der Lage sind, mit den Epoxy- oder Oxetangruppen Reaktionen einzugehen, insbesondere Additions- und/oder Substitutionsreaktionen, sowie optional weitere einpolymerisierbare Comonomere, insbesondere hartmachende Monomere. Die Natur des herzustellenden Polyacrylats (Haftklebemasse; Heißsiegelmasse, viskoelastisches nichtklebriges Material und dergleichen) lässt sich insbesondere über eine Variation der Glasübergangstemperatur des Polymers durch unterschiedliche Gewichtsanteile der einzelnen Monomere beeinflussen.

Für rein kristalline Systeme gibt es am Schmelzpunkt $T_S$ ein thermisches Gleichgewicht zwischen Kristall und Flüssigkeit. Amorphe oder teilkristalline Systeme sind hingegen durch die Umwandlung der mehr oder weniger harten amorphen bzw. teilkristallinen Phase in eine weichere (gummiartige bis zähflüssige) Phase gekennzeichnet. Am Glaspunkt kommt es insbesondere bei polymeren Systemen zum "Auftauen" (bzw. "Einfrieren" beim Abkühlen) der Brownschen Molekularbewegung längerer Kettensegmente.

Der Übergang vom Schmelzpunkt $T_S$ (auch "Schmelztemperatur"; eigentlich nur für reinkristalline Systeme definiert; "Polymerkristalle") zum Glasübergangspunkt $T_G$ (auch "Glasübergangstemperatur", "Glastemperatur") kann daher als fließend angesehen werden, je nach dem Anteil der Teilkristallinität der untersuchten Probe.

Im Rahmen dieser Schrift wird im Sinne der vorstehenden Ausführung bei der Angabe des Glaspunktes der Schmelzpunkt mit umfasst, es wird also als Glasübergangspunkt (oder gleichbedeutend auch als Glasübergangstemperatur) auch der Schmelzpunkt für die entsprechenden "schmelzenden" Systeme verstanden. Die Angaben der Glasübergangstemperaturen beziehen sich auf die Bestimmung mittels dynamisch mechanischer Analyse (DMA) bei geringen Frequenzen.

Zur Erzielung von Polymeren, beispielsweise Haftklebemassen oder Heißsiegelmassen, mit gewünschten Glasübergangstemperaturen wird die mengenmäßige Zusammensetzung der Monomermischung vorteilhaft derart gewählt, dass sich nach einer Gleichung (G1) in Analogie zur ***Fox***-Gleichung (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Bevorzugt wird ein Polyacrylat eingesetzt, dass auf die folgende Monomerzusammensetzung zurückgeführt werden kann:

a) Acrylsäureester und/oder Methacrylsäureester der folgenden Formel $CH_2 = C(R^I)(COOR^{II})$ wobei R' = H oder $CH_3$ und R" ein Alkylrest mit 4 bis 14 C-Atomen ist,
b) olefinisch ungesättigte Monomere mit funktionellen Gruppen der für eine Reaktivität mit Epoxid- oder Oxetangruppen bereits definierten Art,
c) optional weitere Acrylate und/oder Methacrylate und/oder olefinisch ungesättigte Monomere, die mit der Komponente (a) copolymerisierbar sind.

Zur Anwendung des Polyacrylats als Haftkleber sind die Anteile der entsprechenden Komponenten (a), (b), und (c) derart gewählt, dass das Polymerisationsprodukt insbesondere eine Glastemperatur ≤ 15 °C (DMA bei geringen Frequenzen) aufweist.

Es ist zur Herstellung von Haftklebemassen sehr vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc).

Für die Anwendung eines Heißschmelzklebers, also eines Materials, welches erst durch Erwärmen haftklebrig wird, werden die Anteile der entsprechenden Komponenten (a), (b), und (c) insbesondere derart gewählt, dass das Copolymer eine Glasübergangstemperatur ($T_G$) zwischen 15 °C und 100 °C aufweist, bevorzugt zwischen 30 °C und 80 °C, besonders bevorzugt zwischen 40 °C und 60 °C. Die Anteile der Komponenten (a), (b), und (c) sind entsprechend zu wählen.

Ein viskoelastisches Material, was beispielsweise typischerweise beidseitig mit haftklebrigen Schichten kaschiert sein kann, hat insbesondere eine Glasübergangstemperatur ($T_G$) zwischen - 50 °C bis +100 °C, bevorzugt zwischen -20 °C bis + 60°C, besonders bevorzugt 0°C bis 40°C. Die Anteile der Komponenten (a), (b), und (c) sind auch hier entsprechend zu wählen.

Die Monomere der Komponente (a) sind insbesondere weichmachende und/oder unpolare Monomere.

Vorzugsweise werden für die Monomere (a) Acrylmonomere eingesetzt, die Acryl- und Methacrylsäureester mit Alkylgruppen, bestehend aus 4 bis 14 C-Atomen, bevorzugt 4 bis 9 C-Atomen, umfassen. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigten Isomere, wie z. B. 2-Ethylhexylacrylat, 2-Ethylhexylmethacrylat.

Die Monomere der Komponente (b) sind insbesondere olefinische ungesättigter Monomere (b) mit funktionellen Gruppen, insbesondere mit funktionellen Gruppen, die eine Reaktion mit den Epoxidgruppen eingehen können.

Bevorzugt werden für die Komponente (b) Monomere mit solchen funktionellen Gruppen eingesetzt, die aus der folgenden Aufzählung ausgewählt sind: Hydroxy-, Carboxy-, Sulfonsäure-, oder Phosphonsäuregruppen, Säureanhydride, Epoxide, Amine. Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Prinzipiell können im Sinne der Komponente (c) alle vinylisch-funktionalisierten Verbindungen eingesetzt werden, die mit der Komponente (a) und/oder der Komponente (b) copolymerisierbar sind, und können auch zur Einstellung der Eigenschaften der resultierenden Haftklebemasse dienen.

Beispielhaft genannte Monomere für die Komponente (c) sind:

Methylacrylat, Ethylacrylat, Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufuryl-acrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxy-ethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Dimethylaminopropylacrylamid, Dimethylaminopropylmethacrylamid, *N*-(1-Methylundecyl)acrylamid, *N*-(n-Butoxymethyl)acrylamid, *N*-(Butoxymethyl)methacrylamid, *N*-(Ethoxymethyl)acrylamid, *N*-(n-Octadecyl)acrylamid, weiterhin *N*,*N*-Dialkyl-substituierte Amide, wie beispielsweise *N*,*N*-Dimethylacrylamid, *N*,*N*-Dimethylmethacrylamid, *N*-Benzylacrylamide, *N*-Isopropylacrylamid, *N-tert*-Butylacrylamid, *N-tert*-Octylacrylamid, *N*-Methylolacrylamid, *N*-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, *N*-Vinylphthalimid, *N*-Vinyllactam, *N*-Vinylpyrrolidon, Styrol, a- und p-Methylstyrol, a-Butylstyrol, 4-n-Butylstyrol, 4-n-Decylstyrol, 3,4-Dimethoxystyrol. Makromonomere wie 2-Polystyrolethylmethacrylat (Molekulargewicht $M_w$ von 4000 bis 13000 g/mol), Poly(Methylmethacrylat) ethylmethacrylat ($M_w$ von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind z.B. Benzoinacrylat- und acrylatfunktionalisierte Benzophenonderivat-Monomere, die eine Vernetzung durch Elektronenbestrahlung unterstützen sind, z.B. Tetrahydrofufurylacrylat, *N-tert*-Butylacrylamid, Allylacrylat wobei diese Aufzählung nicht abschließend ist.

**Herstellung der Polymerisate**

Die Herstellung der Polyacrylate kann nach den dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert.

Vorzugsweise werden die Polyacrylate durch Polymerisation der Monomeren in Lösungsmitteln, insbesondere in Lösungsmitteln eines Siedebereichs von 50 bis 150 °C, vorzugsweise von 60 bis 120 °C unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegt, hergestellt.

Prinzipiell eignen sich alle für Acrylate dem Fachmann geläufigen, üblichen Initiatoren. Beispiele für Radikalquellen sind Peroxide, Hydroperoxide und Azoverbindungen, z.B. Dibenzoylperoxid, Cumolhydroperoxid, Cyclohexanonperoxid, Di-tert-butylperoxid, Cyclohexyl-sulfonylacetylperoxid, Diisopropylpercarbonat, *tert*-Butylperoktoat, Benzpinacol. In einer sehr bevorzugten Vorgehensweise wird als radikalischer Initiator 2,2'-Azobis(2-methylbutyronitril) (Vazo® 67™ der Fa. DUPONT) oder 2,2'-Azobis(2-methylpropionitril) (2,2'-Azobisisobutyronitril; AIBN; Vazo® 64™ der Fa. DUPONT) verwendet.

Als Lösungsmittel kommen Alkohole, wie Methanol, Ethanol, n-und iso-Propanol, n-und iso-Butanol, vorzugsweise Isopropanol und/oder Isobutanol; sowie Kohlenwasserstoffe wie Toluol und insbesondere Benzine eines Siedebereichs von 60 bis 120 °C in Frage. Insbesondere können Ketone, wie vorzugsweise Aceton, Methylethylketon, Methylisobutylketon und Ester, wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsgemisch, enthalten, vorgezogen werden.

Die gewichtsmittleren Molekulargewichte $M_w$ der Polyacrylate liegen bevorzugt in einem Bereich von 20.000 bis 2.000.000 g/mol; sehr bevorzugt in einem Bereich von 100.000 bis 1.000.000 g/mol, äußerst bevorzugt in einem Bereich von 150.000 bis 500.000 g/mol. Die Angaben des mittleren Molekulargewichtes $M_w$ und der Polydisperistät PD in dieser Schrift beziehen sich auf die Bestimmung per Gelpermeationschromatographie. Dazu kann es vorteilhaft sein, die Polymerisation in Gegenwart geeigneter Polymerisationsregler wie Thiolen, Halogenverbindungen und/oder Alkoholen durchzuführen, um das gewünschte mittlere Molekulargewicht einzustellen.

Das Polyacrylat hat vorzugsweise einen K-Wert von 30 bis 90, besonders bevorzugt von 40 bis 70, gemessen in Toluol (1%ige Lösung, 21 °C). Der K-Wert nach FIKENTSCHER ist ein Maß für das Molekulargewicht und Viskosität des Polymerisats.

Für das erfindungsgemäße Verfahren besonders geeignet sind Polyacrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit. Zudem ermöglich das niedrigere Molekulargewicht eine leichtere Verarbeitung aus der Schmelze, da die Fließviskosität gegenüber einem breiter verteilten Polyacrylats bei weitgehend gleichen Anwendungseigenschaften geringer ist. Eng verteilte Polyacrylate können vorteilhaft durch anionische Polymerisation oder durch kontrollierte radikalische Polymerisationsmethoden hergestellt werden, wobei letzteres besonders gut geeignet ist. Beispiele für derartige Polyacrylate, die nach dem RAFT Verfahren hergestellt werden, sind in der US 6,765,078 B2 und US 6,720,399 B2 beschrieben. Auch über *N*-Oxyle lassen sich entsprechende Polyacrylate herstellen, wie beispielsweise in der EP 1 311 555 B1 beschrieben ist. Auch die Atom Transfer Radical Polymerization (ATRP) lässt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (vgl. beispielsweise EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Man kann den durch das erfindungsgemäße Verfahren erhältlichen Polyacrylaten vor der thermischen Vernetzung zumindest ein klebrigmachendes Harz beimischen. Als zuzusetzende klebrigmachende Harze sind die vorbekannten und in der Literatur beschriebenen Klebharze einsetzbar. Insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Bevorzugt lassen sich Pinen-, Inden- und Kolophoniumharze einsetzen, deren disproportionierte, hydrierte, polymerisierte, veresterte Derivate und Salze, Terpenharze und Terpenphenolharze sowie C5-, C9- und andere Kohlenwasserstoffharze. Auch Kombinationen dieser und weiterer Harze können vorteilhaft eingesetzt werden, um die Eigenschaften der resultierenden Haftklebemasse wunschgemäß einzustellen. Besonders bevorzugt lassen sich alle mit dem entsprechenden Polyacrylat kompatiblen (löslichen) Harze einsetzen. In einer besonders bevorzugten Vorgehensweise werden Terpenphenolharze und/oder Kolophoniumester hinzugesetzt.

Optional können auch pulver- und granulatförmige Füllstoffe, Farbstoffe und Pigmente, besonders auch abrasive und verstärkende, wie z.B. Kreiden ($CaCO_3$), Titandioxide, Zinkoxide und Ruße in die Polyacrylatlösung eingearbeitet werden.

Weiterhin können schwerentflammbare Füllstoffe, elektrisch leitfähige Füllstoffe (wie beispielsweise Leitruß, Kohlenstofffasern und/oder silberbeschichtete Kugeln), weiterhin thermisch leitfähige Materialien, weiterhin ferromagnetische Additive, weiterhin Additive zur Volumenerhöhung, insbesondere zur Herstellung geschäumter Schichten, (wie beispielsweise Blähmittel, Glasvollkugeln, Glashohlkugeln, Mikrokugeln aus anderen Materialien, expandierbare Microballons, Kieselsäure, Silikate, organisch nachwachsende Rohstoffe, beispielsweise Holzmehl, organische und/oder anorganische Nanopartikel, Fasern), zugegeben oder eincompoundiert werden.

Weiterhin können anorganische und/oder organische Farbstoffe (in Form von Pasten, Compounds oder Pigmenten), Alterungsschutzmitteln, Lichtschutzmitteln, Ozonschutzmitteln, Compoundierungsmittel und/oder Blähmittel vor oder nach der Aufkonzentration des Polyacrylats zugegeben oder eincompoundiert werden.

Optional können die üblichen Weichmacher (Plastifizierungsmittel), insbesondere in Konzentrationen von bis zu 5 Gew.-%, zugesetzt werden.

Weiterhin optional kann das Polyacrylat auch mit anderen Polymeren geblendet bzw. abgemischt werden. Hierzu eignen sich Polymere auf Basis von Naturkautschuk, Synthesekautschuk, EVA, Siliconkautschuk, Acrylkautschuk, Polyvinylether.

Der Releaseliner ist erfindungsgemäß mit einer Silikonbeschichtung ausgerüstet. Vorzugsweise handelt es bei der auf dem Liner vorgesehene Silikonbeschichtung um ein additionsvernetzendes Silikon.

Im Folgenden werden besonders vorteilhafte Silikone näher erläutert.

Die erfindungsgemäß eingesetzten silikonbasierenden Trennbeschichtungen sind solche auf additionsvernetzender Basis, also solche, die sich durch Hydrosilylierung - insbesondere thermisch - härten lassen. Diese Trennsysteme umfassen üblicherweise die folgenden Bestandteile: ein alkenyliertes Polydiorganosiloxan (insbesondere lineare Polymere mit endständigen Alkenylgruppen), ein Polyorganowasserstoffsiloxan-Vernetzungsmittel sowie einen Hydrosilylierungskatalysator, insbesondere der vorstehend bezeichneten Art.

Erfindungsgemäß vorteilhafte, thermisch härtende Trennbeschichtungen auf Basis von additionsvernetzenden Silikonen sind häufig Mehrkomponentensysteme, welche typischerweise aus folgenden Komponenten bestehen:

a) Einem linearen oder verzweigten Polydimethylsiloxan, welches aus ca. 80 bis 200 Dimethylsiloxan-Einheiten besteht und an den Kettenenden mit Vinyldimethylsiloxy-Einheiten abgestoppt ist, oder einem linearen Polydimethylsiloxan, welches aus ca. 80 bis 200 Dimethylsiloxan-Einheiten und ca. 1 bis 10 Methylvinylsiloxan-Einheiten besteht sowie an den Kettenenden mit Vinyldimethylsiloxy-Einheiten abgestoppt ist. Typische Vertreter sind zum Beispiel lösungsmittelfreie, additionsvernetzende Silikonöle, wie DEHESIVE® 920, 912 oder 610, alle kommerziell erhältlich bei Wacker-Chemie GmbH, oder wie SYL-OFF® SL 9104, kommerziell erhältlich bei Dow Corning GmbH.

b) Einem linearen, cyclischen oder verzweigten Vernetzer oder einer beliebigen Mischung dieser, wobei der Vernetzer üblicherweise aus Methylhydrogensiloxy- und Dimethylsiloxy-Einheiten beziehungsweise nur aus Methylhydrogensiloxy-Einheiten zusammengesetzt ist und die Kettenenden entweder mit Trimethylsiloxy-Gruppen oder Dimethylhydrogensiloxy-Gruppen abgesättigt sind. Typische Vertreter dieser Produktklasse sind zum Beispiel Hydrogenpolysiloxane mit hohem Gehalt an reaktivem Si-H wie die Vernetzer V24, V90 oder V06, welche bei Wacker-Chemie GmbH kommerziell erhältlich sind, oder der Vernetzer SYL-OFF® 7689, kommerziell erhältlich bei Dow Corning GmbH.

c) Einem Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRA® 17 oder CRA® 42, kommerziell erhältlich bei Wacker-Chemie GmbH, oder SYL-OFF® SL 9154, kommerziell erhältlich bei Dow Corning GmbH.

d) Einem silikonlöslichen Platinkatalysator wie zum Beispiel einem Platindivinyltetramethyldisiloxan-Komplex, welcher üblicherweise als Karstedt-Komplex bezeichnet wird und beispielsweise unter der Bezeichnung Katalysator OL bei Wacker-Chemie GmbH oder unter der Bezeichnung SYL-OFF® 4000 bei Dow Corning GmbH kommerziell erhältlich ist.

Des Weiteren sind Massen geeignet, wie sie zum Beispiel in der bereits oben erwähnten DE 600 01 779 T2, dort insbesondere Anspruch 12 sowie in den Abschnitten [0036] bis [0050], beschrieben werden. Diese Trennsysteme sind solche, die durch Additionsreaktion vernetzen, nämlich durch Temperaturbehandlung eines Gemisches aus einem Organopolysiloxan mit direkt an die Siliciumatome gebundenen Wasserstoffatomen und einem Organopolysiloxan mit direkt an die Siliciumatome gebundenen Vinylgruppen in Gegenwart eines Hydrosilylierungskatalysators.

Die Silikone werden auf dem Träger aufgebracht und bilden somit eine geschlossene Silikonbeschichtung.

Als Trägermaterial des Liners können Papiere oder Folien eingesetzt werden. Als Folien werden dabei Polyolefinfolien (Polypropylen- und Polyethylenfolien) oder Polyesterfolien eingesetzt.

Gegenstand der Erfindung ist weiterhin die Verwendung von einem oder mehreren Kontaktgiften, die aus der folgenden Auflistung ausgewählt werden: Amine, Amide, Cyanate, Nitrile, Oxime, Nitroso-Verbindungen, Chelate, Oxazoline, Thioverbindungen, Disulfide, Zinnsalze, Phosphine, Phosphite, Arsen-Verbindungen, Antimon-Verbindungen, Selenide, nicht-aromatische Heterocyclen mit einem freien Elektronenpaar; in einer acrylatbasierenden Haftklebemasse, die sich auf einem mit einer Silikonbeschichtung ausgerüsteten Liner befindet, zur Regulierung der Abzugskräfte, mit denen der Liner von der Haftklebemasse abgezogen werden kann.

Wie vorstehend beschrieben sind derartige Hydrosilylierungskatalysatoren häufig solche auf Platinbasis. Insbesondere erfindungsgemäß ist daher die Verwendung von einem oder mehreren Kontaktgiften für platinhaltige Hydrosilylierungskatalysatoren, die aus der folgenden Auflistung ausgewählt werden: Amine, Amide, Cyanate, Nitrile, Oxime, Nitroso-Verbindungen, Chelate, Oxazoline, Thioverbindungen, Disulfide, Zinnsalze, Phosphine, Phosphite, Arsen-Verbindungen, Antimon-Verbindungen, Selenide, nicht-aromatische Heterocyclen mit einem freien Elektronenpaar; in einer acrylatbasierenden Klebemasse, die sich auf einem mit einer Silikonbeschichtung ausgerüsteten Liner befindet, zur Regulierung der Abzugskräfte, mit denen der Liner von der Klebemasse abgezogen werden kann.

Vorzugsweise liegen die Kontaktgifte im Rahmen der erfindungsgemäßen Verwendung in einer Menge bis zu 10 Gew.-%, besonders bevorzugt von 0,0001 bis 5 Gew.-%, ganz besonders bevorzugt 0,0001 bis 1 Gew.-% in der Haftklebemasse vor.

Schließlich betrifft die Erfindung die Verwendung der erfindungsgemäßen Acrylat-Haftklebemasse in einem Klebeband.

Im Folgenden wird die Erfindung anhand von Beispielen näher erläutert, ohne dass diese in irgendeiner Form einschränkend wirken sollen.

## Beispiele

### Allgemeine Vorgehensweise

### Herstellung der Releaseliner

Eine vernetzbare Silikonmasse bestehend aus 70 Teilen Dow Corning SYL-OFF® SL 9104, 30 Teilen Dow Corning SYL-OFF® SL 9154, 8,9 Teile Dow Corning SYL-OFF® SL 7689 und 1,6 Teile Dow Corning SYL-OFF® 4000 wurde auf einer PET-Folie (Lumirror 60.01, 75$\mu$m, Toray) mit Hilfe eines Rakels Nr. 1 aus 30%iger Lösung und Benzin aufgetragen. Das Silikon wurde bei 150 °C für 30 Sekunden vernetzt. Der Silikonauftrag wurde auf 1,3 g/m$^2$ eingestellt.

### Herstellung der Basis-Haftklebemasse, die im jeweiligen Beispiel modifiziert ist.

In einer radikalischen Polymerisation in einem konventionellen 200 L-Reaktor wurden 0,7 kg Acrylsäure, 33,95 kg 2-Ethylhexylacrylat, 33,95 kg Butylacrylat, 1,4 kg Gylcidylmethacrylat und 23,35 kg Siedegrenzbenzin 60/95 sowie 23,35 kg Aceton vorgelegt. Nachdem 45 Minuten Stickstoffgas unter Rühren durch die Reaktionslösung geleitet worden war, wurde der Reaktor auf 58 °C geheizt und 0,07 kg Vazo 67™ (Fa. DuPont) gelöst in 0,35 kg Aceton hinzugegeben.

Anschließend wurde das äußere Heizbad auf 75 °C erwärmt und die Reaktion konstant bei dieser Außentemperatur durchgeführt. Nach 1 h Reaktionszeit wurden 0,07 kg Vazo 67™ (Fa. DuPont) gelöst in 0,35 kg Aceton hinzugegeben. Nach 2,5 h Reaktionszeit wurden 0,091 kg Dicyclohexylperoxydicarbonat (Perkadox 16®, Fa. Akzo Nobel) hinzugegeben. Nach 3,5 h Reaktionszeit wurden 10,50 kg Siedegrenzbenzin 60/95 als Verdünnung hinzugegeben. Eine weitere Verdünnung erfolgte nach 7,5 h mittels Zugabe von 10,5 kg Siedegrenzbenzin 60/95. Nach 24 h Reaktionszeit wurde die Polymerisation abgebrochen und das Reaktionsgefäß auf Raumtemperatur abgekühlt.

Anschließend wurde das Polymer mit 37,5 Gew.-% Sylvares TP 95 (Terpen-Phenol-Harz mit einer Erweichungstemperatur von 95 °C) und 0,3 Gew.-% $ZnCl_2$ abgemischt (Gew.-% jeweils bezogen auf das Polymer).

**Vorbereitung der Prüfstreifen Beispiel 1-18, Vergleichsbeispiel 1-5**

Eine Haftklebemasse mit der unter dem jeweiligen Beispiel angegebenen Zusammensetzung wurde, soweit nicht abweichend beschrieben, nach zwei Tagen Reifezeit des Releaseliners auf dem oben beschriebenen Releaseliner mit Hilfe eines Streichbalkens aufgetragen. Die Haftklebemasse wurde nach dem Abdampfen des größten Teils des Lösungsmittels für 15 Minuten bei 120 °C in einem Umluftofen getrocknet. Es wurde ein Masseauftrag von 50 g/m$^2$ gewählt. Nach dem Abkühlen der Proben wurde eine 23 µm dicke PET-Folie [Polibond D23H, Polifibra Folien GmbH] auf die Haftklebemasse kaschiert. Die jeweiligen Verbünde aus Releaseliner, Haftklebemasse und 23µm PET-Folie wurden in 2 cm breite Streifen geschnitten.

**Vorbereitung der Prüfstreifen Beispiel 19-24, Vergleichsbeispiel 6**

Eine Haftklebemasse mit der unter dem jeweiligen Beispiel angegebenen Zusammensetzung wurde nach zwei Tagen Reifezeit des Releaseliners auf einer 23 µm dicke PET-Folie [Polibond D23H, Polifibra Folien GmbH] mit Hilfe eines Streichbalkens aufgetragen. Die Haftklebemasse wurde nach dem Abdampfen des größten Teils des Lösungsmittels für 15 Minuten bei 120 °C in einem Umluftofen getrocknet. Es wurde ein Masseauftrag von 50 g/m$^2$ gewählt. Nach dem akklimatisieren der Proben auf 23±1 °C und 50±5% relative Luftfeuchte wurde der oben beschriebene Releaseliner auf die Haftklebemasse kaschiert. Die jeweiligen Verbünde aus Releaseliner, Haftklebemasse und 23µm PET-Folie wurden schnellstmöglich in 2 cm breite Streifen geschnitten.

**Beschreibung der Messung für Beispiel 1-18, Vergleichsbeispiel 1-5**

Die Abzugskraft der PET-Folie und Haftklebemasse vom Releaseliner wurde in einem Winkel von 180° bei einer Abzugsgeschwindigkeit von 0,3 m/min gemessen, wobei die Messung bei 23±1 °C und einer relativen Luftfeuchte von 50±5 % durchgeführt wurde. Die Messung der Abzugskraft wurde ca. 24 Stunden nach Beschichtung des Trennpapiers mit der Haftklebemasse gemessen.

**Beschreibung der Messung für Beispiel 19-24, Vergleichsbeispiel 6**

Die geschnittenen Streifen wurden für eine Minute bei einem Druck von 2 N/cm$^2$ gelagert. Die Abzugskraft der PET-Folie und Haftklebemasse vom Releaseliner wurde in einem Winkel von 180° bei einer Abzugsgeschwindigkeit von 0,3 m/min gemessen, wobei die Messung bei 23±1 °C und einer relativen Luftfeuchte von 50±5 % durchgeführt wurde. Die Zeit zwischen Laminierung des Liners und Messung der Abzugskraft betrug dabei stets weniger als fünf Minuten.

Außerdem wurde noch eine Messung der Abzugskraft durchgeführt, nachdem die Verbünde aus Releaseliner, Haftklebemasse und PET-Folie für 30 Tage bei 70°C gelagert haben.

**Vergleichsbeispiel 1**

Die Basis Haftklebemasse wurden keine weiteren Verbindungen zugesetzt. Wie im allgemeinen Teil beschrieben, erfolgte die Beschichtung nach einer Reifezeit von 2 Tagen.

**Vergleichsbeispiel 2**

Die Basis Haftklebemasse wurden keine weiteren Verbindungen zugesetzt. Abweichend zur allgemeinen Beschreibung wurde der Releaseliner vor der Beschichtung mit Haftklebemasse für 7 Tage gelagert.

**Vergleichsbeispiel 3**

Die Basis Haftklebemasse wurden keine weiteren Verbindungen zugesetzt. Abweichend zur allgemeinen Beschreibung wurde der Releaseliner vor der Beschichtung mit Haftklebemasse für 14 Tage gelagert.

**Vergleichsbeispiel 4**

Die Basis Haftklebemasse wurden keine weiteren Verbindungen zugesetzt. Abweichend zur allgemeinen Beschreibung wurde der Releaseliner vor der Beschichtung mit Haftklebemasse für 21 Tage gelagert.

**Vergleichsbeispiel 5**

Die Basishaftklebemasse wurden keine weiteren Verbindungen zugesetzt. Abweichend zur allgemeinen Beschreibung wurde der Releaseliner vor der Beschichtung mit Haftklebemasse für 42 Tage gelagert.

**Beispiel 1a**

Der Basishaftklebemasse wurden 0,16 Gew.-% Dodecylamin zugesetzt.

**Beispiel 1b**

Der Basishaftklebemasse wurden 0,016 Gew.-% Dodecylamin zugesetzt.

**Beispiel 1c**

Der Basishaftklebemasse wurden 0,0016 Gew.-% Dodecylamin zugesetzt.

**Beispiel 2a**

Der Basishaftklebemasse wurden 0,16 Gew.-% Diphenylamin zugesetzt.

**Beispiel 2b**

Der Basishaftklebemasse wurden 0,016 Gew.-% Diphenylamin zugesetzt.

**Beispiel 2c**

Der Basishaftklebemasse wurden 0,0016 Gew.-% Diphenylamin zugesetzt.

**Beispiel 3a**

Der Basishaftklebemasse wurden 0,16 Gew.-% Aminoethylpiperazin zugesetzt.

**Beispiel 3b**

Der Basishaftklebemasse wurden 0,016 Gew.-% Aminoethylpiperazin zugesetzt.

**Beispiel 3c**

Der Basishaftklebemasse wurden 0,0016 Gew.-% Aminoethylpiperazin zugesetzt.

**Beispiel 4a**

Der Basishaftklebemasse wurden 0,13 Gew.-% Triethylentetramin zugesetzt.

**Beispiel 4b**

Der Basishaftklebemasse wurden 0,013 Gew.-% Triethylentetramin zugesetzt.

**Beispiel 4c**

Der Basishaftklebemasse wurden 0,0013 Gew.-% Triethylentetramin zugesetzt.

**Beispiel 5a**

Der Basishaftklebemasse wurden 0,08 Gew.-% Dicyandiamid zugesetzt.

**Beispiel 5b**

Der Basishaftklebemasse wurden 0,008 Gew.-% Dicyandiamid zugesetzt.

**Beispiel 5c**

Der Basishaftklebemasse wurden 0,0008 Gew.-% Dicyandiamid zugesetzt.

**Beispiel 6a**

Der Basishaftklebemasse wurden 0,08 Gew.-% 2-Methyl-1 H-Imidazol zugesetzt.

**Beispiel 6b**

Der Basishaftklebemasse wurden 0,01 Gew.-% 2-Methyl-1 H-Imidazol zugesetzt.

**Beispiel 6c**

Der Basishaftklebemasse wurden 0,0011 Gew.-% 2-Methyl-1 H-Imidazol zugesetzt.

**Beispiel 7a**

Der Basishaftklebemasse wurden 0,19 Gew.-% Meta- und Para-Bisoxazolinbenzol zugesetzt.

**Beispiel 7b**

Der Basishaftklebemasse wurden 0,017 Gew.-% Meta- und Para-Bisoxazolinbenzol zugesetzt.

**Beispiel 7c**

Der Basishaftklebemasse wurden 0,0017 Gew.-% Meta- und Para-Bisoxazolinbenzol zugesetzt.

**Beispiel 8a**

Der Basishaftklebemasse wurden 0,18 Gew.-% Dodecylmercaptan zugesetzt.

**Beispiel 8b**

Der Basishaftklebemasse wurden 0,018 Gew.-% Dodecylmercaptan zugesetzt.

**Beispiel 8c**

Der Basishaftklebemasse wurden 0,002 Gew.-% Dodecylmercaptan zugesetzt.

**Beispiel 9a**

Der Basishaftklebemasse wurden 0,5 Gew.-% Irganox 565 zugesetzt.

**Beispiel 9b**

Der Basishaftklebemasse wurden 0,05 Gew.-% Irganox 565 zugesetzt.

**Beispiel 9c**

Der Basishaftklebemasse wurden 0,005 Gew.-% Irganox 565 zugesetzt.

**Beispiel 10a**

Der Basishaftklebemasse wurden 0,13 Gew.-% Merbol zugesetzt.

**Beispiel 10b**

Der Basishaftklebemasse wurden 0,012 Gew.-% Merbol zugesetzt.

**Beispiel 10c**

Der Basishaftklebemasse wurden 0,0013 Gew.-% Merbol zugesetzt.

**Beispiel 11a**

Der Basishaftklebemasse wurden 0,65 Gew.-% Weston 618F zugesetzt.

**Beispiel 11 b**

Der Basishaftklebemasse wurden 0,065 Gew.-% Weston 618F zugesetzt.

**Beispiel 11 c**

Der Basishaftklebemasse wurden 0,0065 Gew.-% Weston 618F zugesetzt.

**Beispiel 12a**

Der Basishaftklebemasse wurden 0,45 Gew.-% Irganox PS 800 zugesetzt.

**Beispiel 12b**

Der Basishaftklebemasse wurden 0,045 Gew.-% Irganox PS 800 zugesetzt.

**Beispiel 12c**

Der Basishaftklebemasse wurden 0,0045 Gew.-% Irganox PS 800 zugesetzt.

**Beispiel 13a**

Der Basishaftklebemasse wurden 0,24 Gew.-% Tributylphosphit zugesetzt.

**Beispiel 13b**

Der Basishaftklebemasse wurden 0,024 Gew.-% Tributylphosphit zugesetzt.

**Beispiel 13c**

Der Basishaftklebemasse wurden 0,0024 Gew.-% Tributylphosphit zugesetzt.

**Beispiel 14a**

Der Basishaftklebemasse wurden 0,27 Gew.-% Triphenylphosphit zugesetzt.

**Beispiel 14b**

Der Basishaftklebemasse wurden 0,031 Gew.-% Triphenylphosphit zugesetzt.

**Beispiel 14c**

Der Basishaftklebemasse wurden 0,0027 Gew.-% Triphenylphosphit zugesetzt.

**Beispiel 15a**

Der Basishaftklebemasse wurden 0,24 Gew.-% Triphenylphosphin zugesetzt.

**Beispiel 15b**

Der Basishaftklebemasse wurden 0,026 Gew.-% Triphenylphosphin zugesetzt.

**Beispiel 15c**

Der Basishaftklebemasse wurden 0,0024 Gew.-% Triphenylphosphin zugesetzt.

**Beispiel 16a**

Der Basishaftklebemasse wurden 0,58 Gew.-% Irgafos 168 zugesetzt.

**Beispiel 16b**

Der Basishaftklebemasse wurden 0,057 Gew.-% Irgafos 168 zugesetzt.

**Beispiel 16c**

Der Basishaftklebemasse wurden 0,0056 Gew.-% Irgafos 168 zugesetzt.

**Beispiel 17a**

Der Basishaftklebmasse wurden 0,325 Gew.% Pentaerythritol-tetra-(3-mercaptopropionat) zugesetzt.

**Beispiel 17b**

Der Basishaftklebmasse wurden 0,033 Gew.% Pentaerythritol-tetra-(3-mercaptopropionat) zugesetzt.

**Beispiel 17c**

Der Basishaftklebmasse wurden 0,0033 Gew.% Pentaerythritol-tetra-(3-mercaptopropionat) zugesetzt.

**Beispiel 18a**

Der Basishaftklebmasse wurden 0,14 Gew.% 2-Ethylhexylthioglyconat zugesetzt.

**Beispiel 18b**

Der Basishaftklebmasse wurden 0,014 Gew.% 2-Ethylhexylthioglyconat zugesetzt.

**Beispiel 18c**

Der Basishaftklebmasse wurden 0,0014 Gew.% 2-Ethylhexylthioglyconat zugesetzt.

Aus der nachfolgenden Tabelle 1 ist zu entnehmen, die Zugabe von Phosphiten, Phosphanen, Aminen, Thiolen und Thioethern die Abzugskraft der PET-Folie und Haftklebemasse vom Releaseliner reduziert. Der Effekt ist umso stärker, je höher die Konzentration der Verbindungen ist. Die Abzugskräfte des Vergleichsbeispiels ohne jegliches Platingift sind am höchsten. Bei den Unterbeispielen c (niedrige Konzentration an Platingift) nähern sich die Abzugskräfte teils schon sehr nah an den Wert des Vergleichsbeispiel 1 an.

Aus der Reihe von Vergleichsbeispiel 1 bis 5 ist zu entnehmen, wie die Abzugskraft des Releaseliners von der Haftklebemasse mit zunehmender Reifezeit abnimmt.

| **Experiment** | **Abzugskraft [cN/cm]** | | |
|---|---|---|---|
| Vergleichsbeispiel 1 | 68 | | |
| Vergleichsbeispiel 2 | 44 | | |
| Vergleichsbeispiel 3 | 26 | | |
| Vergleichsbeispiel 4 | 22 | | |
| Vergleichsbeispiel 5 | 12 | | |
| | Unter-Beispiel a | Unter-Beispiel b | Unter-Beispiel c |
| Beispiel 1 | 26 | 59 | 62 |
| Beispiel 2 | 50 | 57 | 61 |
| Beispiel 3 | 25 | 46 | 47 |
| Beispiel 4 | 14 | 40 | 51 |
| Beispiel 5 | 21 | 39 | 56 |
| Beispiel 6 | 29 | 56 | 62 |
| Beispiel 7 | 19 | 26 | 28 |
| Beispiel 8 | 9 | 15 | 51 |
| Beispiel 9 | 12 | 31 | 58 |
| Beispiel 10 | 14 | 17 | 18 |
| Beispiel 11 | 6 | 9 | 19 |
| Beispiel 12 | 7 | 13 | 45 |
| Beispiel 13 | 7 | 12 | 59 |
| Beispiel 14 | 7 | 10 | 21 |
| Beispiel 15 | 12 | 48 | 54 |
| Beispiel 16 | 7 | 16 | 27 |
| Beispiel 17 | 8 | 19 | 39 |
| Beispiel 18 | 10 | 12 | 35 |

**Tabelle 1**

**Vergleichsbeispiel 6**

Der Basishaftklebemasse wurden keine weiteren Verbindungen zugesetzt. Wie im allgemeinen Teil beschrieben, erfolgte die Laminierung des Releaseliners auf die Haftklebemasse nach einer Reifezeit von 2 Tagen.

**Beispiel 19**

Der Basishaftklebmasse wurden 0,18 Gew.% Dodecylmercaptan zugesetzt.

**Beispiel 20**

Der Basishaftklebmasse wurden 0,19 Gew.% Meta- und Para-Bisoxazolinbenzol zugesetzt.

**Beispiel 21**

Der Basishaftklebmasse wurden 0,45 Gew.% Irganox PS 800 zugesetzt.

**Beispiel 22**

Der Basishaftklebmasse wurden 0,13 Gew.% Merbol zugesetzt.

**Beispiel 23**

Der Basishaftklebmasse wurden 0,65 Gew.% Weston 618F zugesetzt.

**Beispiel 24**

Der Basishaftklebmasse wurden 0,27 Gew.% Triphenylphosphit zugesetzt.

Aus der nachfolgenden Tabelle 2 ist zu entnehmen, dass die Abzugskraft einer Haftklebemasse ohne Platingift bei Lagerung deutlich ansteigt. Die Zugabe eines Kontaktgifts, insbesondere Platingifts, verhindert diesen Anstieg durch Lagerung deutlich.

| xperiment | Abzugskraft sofort [cN/cm] | Abzugskraft nach Lagerung bei 70°C für 30 Tage [cN/cm] |
|---|---|---|
| Vergleichsbeispiel 6 | 7 | 89 |
| Beispiel 19 | 7 | 10 |
| Beispiel 20 | 6 | 12 |
| Beispiel 21 | 7 | 9 |
| Beispiel 22 | 6 | 10 |
| Beispiel 23 | 6 | 8 |
| Beispiel 24 | 6 | 9 |

**Tabelle 2**

Die untersuchten Kontaktgifte waren geeignet, die Aufgabe der Erfindung hervorragend zu erfüllen, ohne einen wesentlichen Einfluss auf die Eignung der Haftklebemassen für ihren jeweiligen Verwendungszweck zu zeigen. Als besonders hervorragend geeignete Kontaktgifte haben sich die Thioverbindungen herausgestellt, insbesondere Dodecylmercaptan, Didodecyl-3-3'-Thiopropionat, 2-Ethylhexylthioglyconat und Pentaerythritol-tetra-(3-mercaptopropionat). Diese Verbindungen zeigten den geringsten Einfluss auf die klebtechnischen Eigenschaften der Klebmasse bezüglich ihres jeweiligen Einsatzgebietes.

**Patentansprüche**

1. Klebeband, umfassend zumindest eine Schicht einer acrylatbasierenden Haftklebemasse und einen mit einer Silikonbeschichtung, umfassend ein alkenyliertes Polydiorganosiloxan, ein Polyorganowasserstoffsiloxan-Vernetzungsmittel sowie einen Hydrosilylierungskatalysator, ausgerüsteten Liner, wobei die Silikonbeschichtung in unmittelbarem Kontakt zu der Haftklebemassenschicht steht, **dadurch gekennzeichnet, dass**
die Haftklebemasse ein oder mehrere Kontaktgifte aufweist, die aus der folgenden Auflistung ausgewählt werden:

Amine, Amide, Cyanate, Nitrile, Oxime, Nitroso-Verbindungen, Chelate, Oxazoline, Thioverbindungen, Disulfide, Zinnsalze, Phosphine, Phosphite, Arsen-Verbindungen, Antimon-Verbindungen, Selenide, nicht-aromatische Heterocyclen mit einem freien Elektronenpaar.

**2.** Klebeband nach Anspruch 1, **dadurch gekennzeichnet, dass**
der Hydrosilylierungskatalysator des Silikons Platin, eine Platin-Komplexverbindung oder eine Platinverbindung ist.

**3.** Klebeband nach einem der vorangehenden Ansprüche, dadurch gekennzeichent, dass
die Kontaktgifte in der Haftklebemasse in einer Menge bis zu 10 Gew.-%, besonders bevorzugt von 0,0001 bis 5 Gew.-%, ganz besonders bevorzugt 0,001 bis 1 Gew.-% vorliegen.

**4.** Verwendung von einem oder mehreren Kontaktgiften, die aus der folgenden Auflistung ausgewählt werden: Amine, Amide, Cyanate, Nitrile, Oxime, Nitroso-Verbindungen, Chelate, Oxazoline, Thioverbindungen, Disulfide, Zinnsalze, Phosphine, Phosphite, Arsen-Verbindungen, Antimon-Verbindungen, Selenide, nicht-aromatische Heterocyclen mit einem freien Elektronenpaar; in einer acrylatbasierenden Haftklebemasse, die sich auf einem mit einer Silikonbeschichtung ausgerüsteten Liner befindet, zur Regulierung der Abzugskräfte, mit denen der Liner von der Haftklebemasse abgezogen werden kann.

**5.** Verwendung von einem oder mehreren Kontaktgiften für platinhaltige Hydosilylierungskatalysatoren, die aus der folgenden Auflistung ausgewählt werden:

Amine, Amide, Cyanate, Nitrile, Oxime, Nitroso-Verbindungen, Chelate, Oxazoline, Thioverbindungen, Disulfide, Zinnsalze, Phosphine, Phosphite, Arsen-Verbindungen, Antimon-Verbindungen, Selenide, nicht-aromatische Heterocyclen mit einem freien Elektronenpaar; in einer acrylatbasierenden Klebemasse, die sich auf einem mit einer Silikonbeschichtung ausgerüsteten Liner befindet, zur Regulierung der Abzugskräfte,
mit denen der Liner von der Klebemasse abgezogen werden kann.

**6.** Verwendung nach einem der Ansprüche 4 bis 5, **dadurch gekennzeichnet, dass** die Kontaktgifte in einer Menge bis zu 10 Gew.-%, besonders bevorzugt von 0,0001 bis 5 Gew.-%, ganz besonders bevorzugt 0,001 bis 1 Gew.-% in der Haftklebemasse vorliegen

## Claims

**1.** Adhesive tape comprising at least one layer of an acrylate-based pressure-sensitive adhesive, and a liner furnished with a silicone coating comprising an alkenylated polydiorganosiloxane, a polyorganohydrosiloxane crosslinking agent, and a hydrosilylation catalyst, the silicone coating being in direct contact with the layer of pressure-sensitive adhesive, **characterized in that** the pressure-sensitive adhesive contains one or more catalyst poisons which are selected from the following compilation: amines, amides, cyanates, nitriles, oximes, nitroso compounds, chelates, oxazolines, thio compounds, disulfides, tin salts, phosphines, phosphites, arsenic compounds, antimony compounds, selenides, nonaromatic heterocycles having a free electron pair.

**2.** Adhesive tape according to Claim 1, **characterized in that**
the hydrosilylation catalyst of the silicone is platinum, a platinum complex or a platinum compound.

**3.** Adhesive tape according to either of the preceding claims, **characterized in that**
the catalyst poisons are present in the pressure-sensitive adhesive in an amount of up to 10% by weight, more preferably from 0.0001% to 5% by weight, very preferably 0.001% to 1% by weight.

**4.** Use of one or more catalyst poisons which are selected from the following compilation: amines, amides, cyanates, nitriles, oximes, nitroso compounds, chelates, oxazolines, thio compounds, disulfides, tin salts, phosphines, phosphites, arsenic compounds, antimony compounds, selenides, nonaromatic heterocycles having a free electron pair; in an acrylate-based pressure-sensitive adhesive which is located on a liner furnished with a silicone coating, for the purpose of regulating the removal forces with which the liner can be removed from the pressure-sensitive adhesive.

**5.** Use of one or more catalyst poisons for platinum-containing hydrosilylation catalysts which are selected from the following compilation: amines, amides, cyanates, nitriles, oximes, nitroso compounds, chelates, oxazolines, thio

compounds, disulfides, tin salts, phosphines, phosphites, arsenic compounds, antimony compounds, selenides, nonaromatic heterocycles having a free electron pair; in an acrylate-based adhesive which is located on a liner furnished with a silicone coating, for the purpose of regulating the removal forces with which the liner can be removed from the adhesive.

6. Use according to either of Claims 4 and 5, **characterized in that** the catalyst poisons are present in the pressure-sensitive adhesive in an amount of up to 10% by weight, more preferably from 0.0001% to 5% by weight, very preferably 0.001% to 1% by weight.

## Revendications

1. Bande adhésive comprenant au moins une couche d'une masse autoadhésive à base d'acrylate et une feuille contrecollée apprêtée avec un revêtement en silicone, comprenant un polydiorganosiloxane alcénylé, un réticulant de type polyorganohydrogénosiloxane ainsi qu'un catalyseur d'hydrosilylation, le revêtement en silicone étant en contact direct avec la couche de masse autoadhésive, **caractérisée en ce que** la masse autoadhésive présente un ou plusieurs poisons de contact, choisis dans la liste suivante : amines, amides, cyanates, nitriles, oximes, composés nitroso, chélates, oxazolines, composés thio, disulfures, sels d'étain, phosphines, phosphites, composés d'arsenic, composés d'antimoine, séléniures, hétérocycles non aromatiques présentant une paire d'électrons libres.

2. Bande adhésive selon la revendication 1, **caractérisée en ce que** le catalyseur d'hydrosilylation du silicone est le platine, un composé complexe du platine ou un composé de platine.

3. Bande adhésive selon l'une quelconque des revendications précédentes, **caractérisée en ce que** les poisons de contact dans la masse autoadhésive se trouvent en une quantité jusqu'à 10% en poids, de manière particulièrement préférée de 0,0001 à 5% en poids, de manière tout particulièrement préférée de 0,001 à 1% en poids.

4. Utilisation d'un ou de plusieurs poisons de contact qui sont choisis dans la liste suivante : amines, amides, cyanates, nitriles, oximes, composés nitroso, chélates, oxazolines, composés thio, disulfures, sels d'étain, phosphines, phosphites, composés d'arsenic, composés d'antimoine, séléniures, hétérocycles non aromatiques présentant une paire d'électrons libres ; dans une masse autoadhésive à base d'acrylate qui se trouve sur une feuille contrecollée apprêtée avec un revêtement en silicone, pour réguler les forces avec lesquelles la feuille contrecollée peut être retirée de la masse autoadhésive.

5. Utilisation d'un ou de plusieurs poisons de contact pour catalyseurs d'hydrosilylation contenant du platine qui sont choisis dans la liste suivante : amines, amides, cyanates, nitriles, oximes, composés nitroso, chélates, oxazolines, composés thio, disulfures, sels d'étain, phosphines, phosphites, composés d'arsenic, composés d'antimoine, séléniures, hétérocycles non aromatiques présentant une paire d'électrons libres ; dans une masse autoadhésive à base d'acrylate qui se trouve sur une feuille contrecollée apprêtée avec un revêtement de silicone, pour réguler les forces avec lesquelles la feuille contrecollée peut être retirée de la masse autoadhésive.

6. Utilisation selon l'une quelconque des revendications 4 à 5, **caractérisée en ce que** les poisons de contact se trouvent dans la masse autoadhésive en une quantité jusqu'à 10% en poids, de manière particulièrement préférée de 0,0001 à 5% en poids, de manière tout particulièrement préférée de 0,001 à 1% en poids.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2006073920 A2
- US 2006020067 A1
- US 2003049441 A1
- US 6204350 B1
- US 6074747 A
- DE 60001779 T2
- EP 0168713 B1
- DE 3820294 C1
- US 4725630 A1
- DE 3316166 C1
- US 6765078 B2
- US 6720399 B2
- EP 1311555 B1
- EP 0824111 A1
- EP 826698 A1
- EP 824110 A1
- EP 841346 A1
- EP 850957 A1
- US 5945491 A
- US 5854364 A
- US 5789487 A


### In der Beschreibung aufgeführte Nicht-Patentliteratur


- **R. DITTMEYER et al.** Chemische Technik, Prozesse und Produkte. Wiley-VCH, 2005, vol. 5, 1142
- **T.G. FOX.** *Bull. Am. Phys. Soc.,* 1956, vol. 1, 123